(19)

Europäisches
Patentamt
European
Patent Office
Office européen
des brevets

(11) **EP 1 844 956 A2**

(12) **EUROPEAN PATENT APPLICATION**

(43) Date of publication:
**17.10.2007 Bulletin 2007/42**

(51) Int Cl.:
**B60C 9/14** *(2006.01)*

(21) Application number: **07005707.0**

(22) Date of filing: **20.03.2007**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK YU**

(30) Priority: **10.04.2006 JP 2006107622**

(71) Applicant: **SUMITOMO RUBBER INDUSTRIES,
LTD.**
**Hyogo-ken (JP)**

(72) Inventor: **Tanaka, Susumu**
**Kobe-shi**
**Hyogo 651-0072 (JP)**

(74) Representative: **Manitz, Finsterwald & Partner
GbR**
**Postfach 31 02 20**
**80102 München (DE)**

(54) **Pneumatic tire with sidewall reinforcing layer**

(57)    A tire (2) according to the present invention includes a bead (8) having an apex (28), a carcass (10) and a reinforcing layer (16). The carcass (10) includes a carcass ply having a carcass cord constituted by a polyethylene naphthalate fiber. The carcass ply is constituted by a body extended from an equator plane toward the bead (8) and a turned-up portion extended outward in a radial direction. The reinforcing layer (16) is interposed between the body and the turned-up portion. A ratio of a height in the radial direction from a bead base line to an upper end (54) of the reinforcing layer (16) to a tire sectional height is equal to or higher than 45%. A thickness of the reinforcing layer (16) is equal to or greater than 0.3 mm and is equal to or smaller than 2.5 mm. A hardness of the reinforcing layer (16) is equal to or greater than 70 and is equal to or smaller than 95.

Fig. 1

EP 1 844 956 A2

## Description

This application claims priority on Patent Application No. 2006-107622 filed in JAPAN on April 10, 2006, the entire contents of which are hereby incorporated by reference.

BACKGROUND OF THE INVENTION

Field of the Invention

The present invention relates to a pneumatic tire.

Description of the Related Art

In a radial tire for a car, organic fibers such as a nylon fiber, a rayon fiber and a polyester fiber are used for a material of a carcass cord. In respect of an enhancement in a handling stability, the polyester fiber having a high elasticity is mainly used for the material of the carcass cord.

A pneumatic tire which is excellent in a handling stability and a ride comfort has been disclosed in Japanese Laid-Open Patent Publication No. 2005-178520. Referring to the tire, a carcass cord formed by a polyethylene naphthalate fiber as a material thereof is used and a twist coefficient and an elongation of the carcass cord are optimized.

A bead of the tire has an apex. Some tires include apexes having great heights in a radial direction. The tire has a high lateral stiffness. The tire is excellent in a handling stability. The tire has a high vertical stiffness in addition to the high lateral stiffness. The high vertical stiffness influences the ride comfort of the tire. A stiffness in a sidewall is not uniform. For this reason, the tire has a poor linearity.

It is an object of the present invention to provide a pneumatic tire which is excellent in a handling stability and a ride comfort.

SUMMARY OF THE INVENTION

A pneumatic tire according to the present invention comprises a pair of beads including a core and an apex, a carcass laid over the beads on both sides, and a reinforcing layer. The carcass includes a carcass ply having a carcass cord constituted by a polyethylene naphthalate fiber. The carcass ply is turned up around the core from an inside toward an outside in an axial direction. The carcass ply is constituted by a body extended from an equator plane toward the bead, and a turned-up portion extended outward in a radial direction. The reinforcing layer is interposed between the body and the turned-up portion. A ratio of a height in the radial direction from a bead base line to an upper end of the reinforcing layer to a tire sectional height is equal to or higher than 45%. A thickness of the reinforcing layer is equal to or greater than 0.3 mm and is equal to or smaller than 2.5 mm. A hardness of the reinforcing layer is equal to or greater than 70 and is equal to or smaller than 95.

In the tire, it is preferable that a ratio of a height in the radial direction from the bead base line to a turned-up end of the turned-up portion to the tire sectional height should be equal to or higher than 40%.

In the tire, it is preferable that a lower end of the reinforcing layer should be positioned on an inside in the radial direction from an upper end of the apex. An upper end of the reinforcing layer is positioned on an outside in the radial direction from the turned-up end of the turned-up portion. A ratio of a height in the radial direction from the bead base line to the upper end of the apex to the tire sectional height is equal to or higher than 15% and is equal to or lower than 45%. A ratio of a distance in the radial direction from the turned-up end to the upper end of the reinforcing layer to the tire sectional height is equal to or higher than 5% and is equal to or lower than 20%.

In the tire, it is preferable that an elongation of the carcass cord with a tension load set to be 2.2 g/d should be equal to or higher than 2.0% and should be lower than 3.0%. A twist coefficient of the carcass cord is equal to or higher than 1400 and is equal to or lower than 2000.

In the tire, there is used the carcass cord formed by the polyethylene naphthalate fiber having a higher elasticity than that of a polyethylene terephthalate fiber. Therefore, the tire has a high stiffness. In the tire, the reinforcing layer having the thickness and the hardness regulated properly can contribute to a lateral stiffness while suppressing a rise in a vertical stiffness. The tire is excellent in a handling stability. In the tire, it is not necessary to include an apex having a great height in a radial direction in order to enhance the handling stability. A tire having a rise in a vertical stiffness suppressed is excellent in a ride comfort. The reinforcing layer generates a uniform stiffness in the sidewall. Therefore, the tire is also excellent in a linearity.

BRIEF DESCRIPTION OF THE DRAWINGS

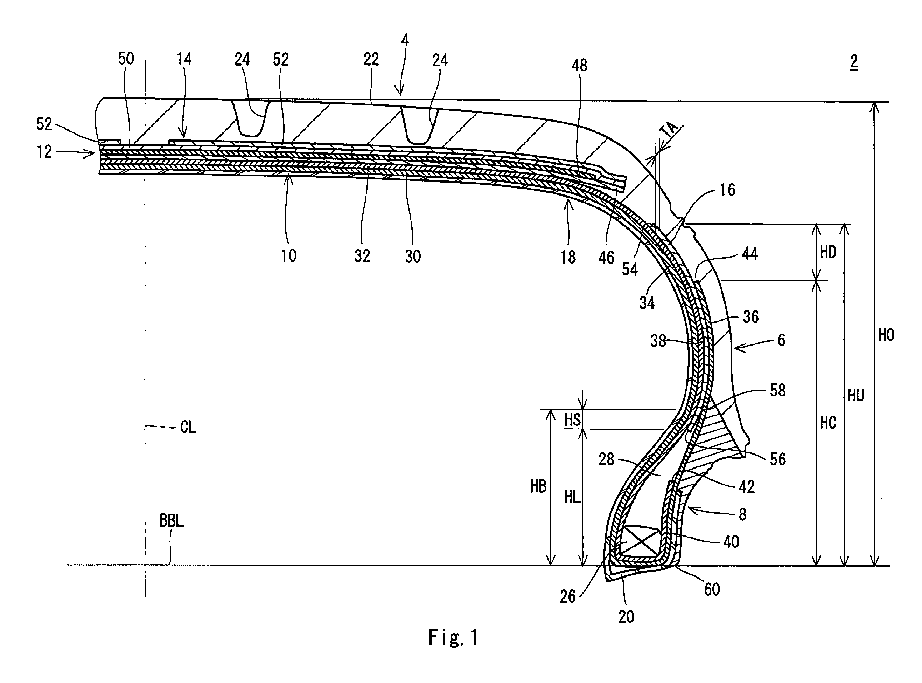

Fig. 1 is a sectional view showing a part of a pneumatic tire according to an embodiment of the present invention.

DESCRIPTION OF THE PREFERRED EMBODIMENTS

The present invention will be described below in detail based on a preferred embodiment with reference to the drawings.

A pneumatic tire 2 shown in Fig. 1 comprises a tread 4, a sidewall 6, a bead 8, a carcass 10, a belt 12, a band 14, a reinforcing layer 16, an inner liner 18 and a chafer 20. The tire 2 is of a tubeless type. In Fig. 1, a vertical direction is set to be a radial direction of the tire 2, a transverse direction is set to be an axial direction of the tire 2, and a perpendicular direction to a paper is set to be a circumferential direction of the tire 2. The tire 2 takes an almost symmetrical shape about a one-dotted chain line CL in Fig. 1. The one-dotted chain line CL represents an equator plane of the tire 2.

The tread 4 is formed by a crosslinked rubber and takes the shape of an outward convex in the radial direction. The tread 4 forms a tread surface 22 to come in contact with a road surface. A groove 24 is provided on the tread surface 22. By the groove 24, a tread pattern is formed.

The sidewall 6 is extended almost inward in the radial direction from an end of the tread 4. The sidewall 6 is formed by a crosslinked rubber. The sidewall 6 absorbs a shock from the road surface. Furthermore, the sidewall 6 prevents the external damage of the carcass 10.

The bead 8 is extended almost inward in the radial direction from the sidewall 6. The bead 8 includes a core 26 and an apex 28 extended outward in the radial direction from the core 26. The core 26 is ring-shaped and includes a plurality of non-extensible wires (typically, steel wires). The apex 28 is outward tapered in the radial direction and is formed by a crosslinked rubber having a high hardness.

The carcass 10 includes a first carcass ply 30 and a second carcass ply 32. The first carcass ply 30 and the second carcass ply 32 are laid between the beads 8 on both sides along the insides of the tread 4 and the sidewall 6. The first carcass ply 30 and the second carcass ply 32 are turned up from an inside toward an outside in an axial direction around the core 26. The first carcass ply 30 is constituted by a first body 34 extended from the equator plane toward the bead 8 and a first turned-up portion 36 extended outward in the radial direction. The second carcass ply 32 is constituted by a second body 38 extended from the equator plane toward the bead 8 and a second turned-up portion 40 extended outward in the radial direction. The second body 38 is provided on an outside of the first body 34. The second turned-up portion 40 is positioned on an inside in the axial direction of the first turned-up portion 36. A turned-up end 42 of the second turned-up portion 40 is provided on an inside in the radial direction from a turned-up end 44 of the first turned-up portion 36. The carcass 10 may be constituted by one carcass ply. Three carcass plies or more may be used for the carcass 10.

Each of the first carcass ply 30 and the second carcass ply 32 is constituted by a carcass cord and a topping rubber, which is not shown. An absolute value of an angle formed by the carcass cord with respect to a circumferential direction is usually equal to or greater than 75 degrees and is equal to or smaller than 90 degrees. In other words, the tire 2 is a radial tire. The carcass cord is constituted by a polyethylene naphthalate fiber (which will be hereinafter referred to as a PEN fiber). More specifically, the carcass cord is constituted by a polyethylene-2, 6-naphthalate fiber.

The belt 12 is positioned on an outside in the radial direction of the carcass 10. The belt 12 is provided on the carcass 10. The belt 12 reinforces the carcass 10. The belt 12 is constituted by an inner belt ply 46 and an outer belt ply 48. Each of the inner belt ply 46 and the outer belt ply 48 is constituted by a belt cord and a topping rubber, which is not shown. The belt cord is inclined to the circumferential direction. An absolute value of an angle formed by the belt cord with respect to the circumferential direction is usually equal to or greater than 10 degrees and is equal to or smaller than 35 degrees. An inclining direction of the belt cord of the inner belt ply 46 with respect to the circumferential direction is reverse to that of the belt cord of the outer belt ply 48 with respect to the circumferential direction. A preferable material of the belt cord is steel. An organic fiber may be used for the belt cord. In this case, examples of a preferable organic fiber include a nylon fiber, a polyester fiber, a rayon fiber, a polyethylene naphthalate fiber and an aramid fiber. The belt 12 may be constituted by one belt ply.

The band 14 is positioned on an inside in the radial direction of the tread 4 and an outside in the radial direction of the belt 12. The band 14 covers the belt 12. The band 14 includes a full band ply 50 and a pair of edge band plies 52 separated from each other in the axial direction. The full band ply 50 is provided on an external surface of the belt 12. The edge band ply 52 is provided on an outside in the radial direction of the full band ply 50. Each of the full band ply 50 and the edge band ply 52 is constituted by a band cord and a topping rubber, which is not shown. The band cord is extended in the circumferential direction and is wound spirally. The band cord is so-called jointless. The belt 12 is constrained by the band cord. Therefore, lifting of the belt 12 is suppressed. The band cord is usually constituted by an organic fiber. Examples of a preferable organic fiber include a nylon fiber, a polyester fiber, a rayon fiber, a polyethylene naphthalate fiber and an aramid fiber.

The inner liner 18 is bonded to an inner peripheral surface of the carcass 10. The inner liner 18 is formed by a crosslinked rubber. A rubber having a low air permeability is used for the inner liner 18. The inner liner 18 plays a part in holding the internal pressure of the tire 2.

The chafer 20 is positioned in the vicinity of the bead 8. When the tire 2 is incorporated into a rim, the chafer 20 abuts on the rim. By the abutment, the vicinity of the bead 8 is protected. The chafer 20 is usually constituted by a cloth and a rubber impregnated in the cloth. It is also possible to use the chafer 20 formed by a single rubber.

The reinforcing layer 16 is constituted by a crosslinked rubber. The reinforcing layer 16 is positioned in the vicinity of the sidewall 6. The reinforcing layer 16 is positioned on an outside in the axial direction of the second body 38. The reinforcing layer 16 is positioned on an inside in the axial direction of the first turned-up portion 36. A part of the reinforcing layer 16 is interposed between the second body 38 and the first turned-up portion 36. In the tire 2, an upper end 54 of the reinforcing layer 16 is positioned on an outside in the radial direction from the turned-up end 44 of the first turned-up portion 36. The upper end 54 of the reinforcing layer 16 may be positioned on an inside in the radial direction from the turned-up end 44 of the first turned-up portion 36. A lower end 56 of the reinforcing layer 16 is positioned on an outside in the radial direction from the turned-up end 42 of the second turned-up portion 40. The lower end 56 of the reinforcing layer 16 may be positioned on an inside in the radial direction from the turned-up end 42 of the second turned-up portion 40.

In the tire 2, a material of the carcass cord is a PEN fiber having a higher elasticity than a polyethylene terephthalate fiber (which will be hereinafter referred to as a PET fiber). The tire 2 has a high stiffness. The tire 2 is excellent in a handling stability.

In the tire 2, the reinforcing layer 16 increases a stiffness in the vicinity of the sidewall 6. In the tire 2, the reinforcing layer 16 having a thickness and a hardness regulated can contribute to a lateral stiffness while suppressing a rise in a vertical stiffness. The tire 2 is excellent in the handling stability. The tire 2 having the reinforcing layer 16 does not need to be provided with the apex 28 having a great height in the radial direction thereof in order to enhance the handling stability. The tire 2 having the rise in the vertical stiffness suppressed is excellent in a ride comfort. As shown in Fig. 1, the reinforcing layer 16 takes the shape of a sheet. The reinforcing layer 16 can contribute to a uniformity of a stiffness distribution in a region reaching the bead 8 from the vicinity of an end of the tread 4. Therefore, the tire 2 is also excellent in a linearity.

In the tire 2, the lower end 56 of the reinforcing layer 16 is provided on an inside in the radial direction from an upper end 58 of the apex 28. The reinforcing layer 16 overlaps with an upper side of the apex 28 in the axial direction. A clearance is not formed between the reinforcing layer 16 and the apex 28. The tire 2 is excellent in the handling stability. In the tire 2, the lower end 56 of the reinforcing layer 16 may be provided on an outside in the axial direction from the upper end 58 of the apex 28.

In the tire 2, a hardness (a durometer A hardness) measured on a condition of a temperature of 25°C in the reinforcing layer 16 is equal to or greater than 70 and is equal to or smaller than 95. The reinforcing layer 16 having the hardness set to be equal to or greater than 70 can contribute to the lateral stiffness of the tire 2. The tire 2 is excellent in the handling stability. From this viewpoint, the hardness is more preferably equal to or greater than 75, is further preferably equal to or greater than 80, and is particularly preferably equal to or greater than 85. By setting the hardness to be equal to or smaller than 95, it is possible to prevent the stiffness of the reinforcing layer 16 from being excessively increased. The vertical stiffness of the tire 2 can be maintained properly. The tire 2 is excellent in the ride comfort. From this viewpoint, the hardness is more preferably equal to or smaller than 93 and is particularly preferably equal to or smaller than 92.

In the present invention, the hardness is measured by a type A durometer in accordance with the JIS-K6253. The hardness is measured by a superposition of three sheet-like specimens having a thickness of 1.0 mm which are cut out of the tire 2. The hardness is measured on a condition of a temperature of 25°C. In the measurement, it is also possible to use a specimen formed by crosslinking a rubber composition. In this case, the rubber composition is held for 10 minutes in a metal mold at a temperature of 160°C so that the specimen is obtained.

In Fig. 1, a solid line BBL represents a bead base line. The bead base line BBL passes through a heel 60 of the bead 8. A double arrow line TA represents a thickness of the reinforcing layer 16. A double arrow line H0 represents a height in the radial direction from the bead base line BBL to the equator plane of the tread 4. The height H0 in the radial direction indicates a tire sectional height. A double arrow line HU represents a height in the radial direction from the bead base line BBL to the upper end 54 of the reinforcing layer 16. A double arrow line HC represents a height in the radial direction from the bead base line BBL to the turned-up end 44 of the first turned-up portion 36. A double arrow line HD represents a distance in the radial direction from the turned-up end 44 of the first turned-up portion 36 to the upper end 54 of the reinforcing layer 16. In the present invention, the distance HD in the radial direction is obtained by subtracting the height HC in the radial direction from the height HU in the radial direction. In the case in which the upper end 54 of the reinforcing layer 16 is provided on an inside in the radial direction from the turned-up end 44 of the first turned-up portion 36, accordingly, the distance HD in the radial direction is indicated in a negative number. A double arrow line HB represents a height in the radial direction from the bead base line BBL to the upper end 58 of the apex 28. A double arrow line HL represents a height in the radial direction from the bead base line BBL to the lower end 56 of the reinforcing layer 16. A double arrow line HS represents a distance in the radial direction from the lower end 56 of the reinforcing layer 16 to the upper end 58 of the apex 28. In the present invention, the distance HS in the radial direction is obtained by subtracting the height HL in the radial direction from the height HB in the radial direction. In the case in which the upper end 58 of the apex 28 is provided on an inside in the radial direction from the lower end 56 of the reinforcing layer 16, accordingly, the distance HS in the radial direction is indicated in a negative number.

In the tire 2, the thickness TA is equal to or greater than 0.3 mm and is equal to or smaller than 2.5 mm. The reinforcing layer 16 having the thickness TA set to be equal to or greater than 0.3 mm can contribute to the lateral stiffness of the tire 2. The tire 2 is excellent in the handling stability. From this viewpoint, the thickness TA is more preferably equal to or greater than 0.4 mm, is further preferably equal to or greater than 0.6 mm, and is particularly preferably equal to or greater than 0.8 mm. By setting the thickness TA to be equal to or smaller than 2. 5 mm, it is possible to prevent the stiffness of the reinforcing layer 16 from being excessively increased. The vertical stiffness of the tire 2 can be maintained properly. The tire 2 is excellent in the ride comfort. From this viewpoint, the thickness TA is more preferably equal to or smaller than 2.0 mm, is further preferably equal to or smaller than 1.8 mm, and is particularly preferably equal to or smaller than 1.6 mm.

In the tire 2, a ratio of the height HU in the radial direction to the tire sectional height H0 is equal to or higher than 45%. By setting the ratio to be equal to or higher than 45%, the reinforcing layer 16 can contribute to the lateral stiffness of the tire 2. The tire 2 is excellent in the handling stability. From this viewpoint, the ratio is more preferably equal to or higher than 50%, is further preferably equal to or higher than 60%, and is particularly preferably equal to or higher than 70%. In the tire 2, the upper end 54 of the reinforcing layer 16 is not disposed on an outside in the radial direction of the tread surface 22. Therefore, the ratio is lower than 100%. The stiffness can be prevented from being excessively increased by the reinforcing layer 16. Therefore, the ratio is equal to or lower than 90%, which is preferable. The tire 2 having the vertical stiffness maintained properly is excellent in the ride comfort. Therefore, the ratio is more preferably equal to or lower than 80%, is further preferably equal to or lower than 78%, and is particularly preferably equal to or lower than 76%.

In the tire 2, it is preferable that a ratio of the height HC in the radial direction to the tire sectional height H0 should be equal to or higher than 40%. Furthermore, it is more preferable that the ratio should be equal to or higher than 50% and be equal to or lower than 70%. By setting the ratio to be equal to or higher than 40%, the carcass 10 can contribute to a stiffness in the sidewall 6. The tire 2 is excellent in the handling stability. From this viewpoint, the ratio is more preferably equal to or higher than 45%, is further preferably equal to or higher than 50%, and is particularly preferably equal to or higher than 55%. In the tire 2, the turned-up end 44 of the turned-up portion 36 is not disposed on the outside in the radial direction of the tread surface 22. Therefore, the ratio is lower than 100%. In the tire 2, the stiffness can be prevented from being excessively increased by the carcass 10. The tire 2 is excellent in the ride comfort. From this viewpoint, the ratio is more preferably equal to or lower than 70%, is further preferably equal to or lower than 67%, and is particularly preferably equal to or lower than 64%.

In the tire 2, it is preferable that a ratio of the distance HD in the radial direction to the tire sectional height H0 should be equal to or higher than 5% and be equal to or lower than 20%. By setting the ratio to be equal to or higher than 5%, the reinforcing layer 16 can contribute to the lateral stiffness of the tire 2. The tire 2 is excellent in the handling stability. From this viewpoint, the ratio is more preferably equal to or higher than 7% and is particularly preferably equal to or higher than 9%. By setting the ratio to be equal to or lower than 20%, the stiffness can be prevented from being excessively increased by the reinforcing layer 16. The vertical stiffness of the tire 2 can be maintained properly. The tire 2 is excellent in the ride comfort. From this viewpoint, the ratio is more preferably equal to or lower than 18% and is particularly preferably equal to or lower than 16%.

In the tire 2, it is preferable that a ratio of the height HB in the radial direction to the tire sectional height H0 should be equal to or higher than 15% and be equal to or lower than 45%. By setting the ratio to be equal to or higher than 15%, the apex 28 can contribute to the stiffness of the tire 2. The tire 2 is excellent in the handling stability. From this viewpoint, the ratio is more preferably equal to or higher than 20% and is particularly preferably equal to or higher than 25%. By setting the ratio to be equal to or lower than 45%, the stiffness can be prevented from being excessively increased by the apex 28. The vertical stiffness of the tire 2 can be maintained properly. The tire 2 is excellent in the ride comfort. From this viewpoint, the ratio is more preferably equal to or lower than 40% and is particularly preferably equal to or lower than 35%.

As described above, in the tire 2, the lower end 56 of the reinforcing layer 16 is provided on an inside in the radial direction of the upper end 58 of the apex 28. Accordingly, the height HL in the radial direction is smaller than the height HB in the radial direction. In the tire 2, accordingly, the distance HS in the radial direction is indicated in a positive number. In respect of the maintenance of the handling stability and the ride comfort, a ratio of the distance HS in the radial direction to the tire sectional height H0 is preferably equal to or lower than 15% and is more preferably equal to or lower than 10%. The ratio is particularly preferably equal to or lower than 5%.

In the tire 2, the carcass cord holds the shape of the tire 2 while relieving a shock to be received by the tire 2. In the tire 2 in which the stiffness of the carcass cord is properly regulated, it is possible to obtain the ride comfort and the handling stability which are excellent. In respect of the ride comfort, it is preferable that an elongation of the carcass cord provided in the tire 2 with a tension load of 2.2 g/d should be equal to or higher than 2.0%. In respect of the excellent handling stability, it is preferable that the elongation should be lower than 3.0%. The elongation of the carcass cord is measured in accordance with a measurement of an elongation rate in a constant load defined in the JIS-L1017. In this specification, d represents a denier number.

A method of forming the carcass cord is as follows. First of all, an original yarn is first twisted so that a first twisted yarn is formed. Next, a plurality of first twisted yarns is finally twisted so that the carcass cord is formed. At this time, a direction of the final twist is reverse to that of the first twist. Such a carcass cord is referred to as a bitwisted cord.

In the tire 2, a twist coefficient T of the carcass cord is defined in Equation (1), wherein a total denier number of the first twisted yarn is represented as D, the number of times of the twist (per 10 cm) is represented as N and a specific gravity of the final twisted yarn is represented as $\rho$. In the case in which the numbers of times of the twist for the first twisted yarn and the final twisted yarn are different from each other, the number of times of the twist for the final twisted yarn is used.

$$T = N \times (D / \rho)^{1/2} \qquad\qquad (1)$$

In the tire 2, it is preferable that the twist coefficient T should be equal to or higher than 1400 and be equal to or lower than 2000. A carcass cord having the twist coefficient T set to be 1400 or more has a great elongation. The tire 2 having such a carcass cord is excellent in a ride comfort. From this viewpoint, the twist coefficient T is preferably equal to or higher than 1500 and is more preferably equal to or higher than 1700. It is particularly preferable that the twist coefficient T should be equal to or higher than 1800. By setting the twist coefficient T to be equal to or lower than 2000, it is possible to properly maintain the elongation of the carcass cord. The tire 2 having such a carcass cord is excellent in the handling stability. From this viewpoint, the twist coefficient T is more preferably equal to or lower than 1950 and is particularly preferably equal to or lower than 1900.

In the tire 2, it is preferable that the total denier number D of the first twisted yarn should be equal to or greater than 1000 and be equal to or smaller than 5000. A carcass cord having the total denier number D to be equal to or greater than 1000 has a high stiffness. The tire 2 having such a carcass cord is excellent in the handling stability. From this viewpoint, the total denier number D is more preferably equal to or greater than 1500 and is particularly preferably equal to or greater than 2000. By setting the total denier number D to be equal to or lower than 5000, it is possible to properly maintain the stiffness of the carcass cord. The tire 2 having such a carcass cord is excellent in the ride comfort. From this viewpoint, the total denier number D is more preferably equal to or lower than 4500 and is particularly preferably equal to or lower than 4000. In respect of a compatibility of the handling stability and the ride comfort, it is particularly preferable that the total denier number D should be set to be 3000.

In the tire 2, it is preferable that the carcass cord should have a structure of 1500d/2 or 1000d/3. A carcass cord formed by twisting a large number of thin yarns has a high stiffness and a flexibility. The tire 2 having such a carcass cord is excellent in the handling stability and the ride comfort. From this viewpoint, it is more preferable that the carcass cord should have the structure of 1000d/3.

The dimension and the angle of each member of the tire 2 are measured in a state in which the tire 2 is incorporated in a normal rim and the tire 2 is filled with air to obtain a normal internal pressure. During the measurement, a load is not applied to the tire 2. In this specification, the normal rim implies a rim determined in rules on which the tire 2 depends. A "standard rim" in the JATMA rules, a "Design Rim" in the TRA rules and a "Measuring Rim" in the ETRTO rules are included in the normal rim. In this specification, the normal internal pressure implies an internal pressure determined in the rules on which the tire 2 depends. A "maximum air pressure" in the JATMA rules, a "maximum value" described in "TIRE LOAD LIMITS AT VARIOUS COLD INFLATION PRESSURES" in the TRA rules and an "INFLATION PRESSURE" in the ETRTO rules are included in the normal internal pressure. For convenience, an internal pressure of a tire for a car is set to be 180 kPa.

EXAMPLES

[Example 1]

There was obtained a pneumatic tire for a car according to an example 1 which has the basic structure shown in Fig. 1, uses, for a carcass cord, a cord B having a specification shown in the following Table 1 and has a specification shown in the following Table 2. The tire has a size of "245/45R18". A reinforcing layer of the tire has a thickness TA of 1.0 mm. A hardness of the reinforcing layer which was measured on a condition of a temperature of 25°C is 90. A ratio (HU/H0 X 100) of a height HU in a radial direction from a bead base line BBL to an upper end of the reinforcing layer to a tire sectional height H0 is 75%. A ratio (HC/H0 X 100) of a height HC in the radial direction from the bead base line BBL to a turned-up end of a carcass to the tire sectional height H0 is 60%. A ratio (HB/H0 X 100) of a height HB in the radial direction from the bead base line BBL to an upper end of an apex to the tire sectional height H0 is 30%. A ratio (HL/H0 X 100) of a height HL in the radial direction from the bead base line BBL to a lower end of the reinforcing layer to the tire sectional height H0 is 25%.

[Examples 4, 13 and 14]

A tire was obtained in the same manner as in the example 1 except that the thickness TA of the reinforcing layer was set as shown in the following Tables 2 and 3.

[Examples 3, 6 and 15]

A tire was obtained in the same manner as in the example 1 except that the hardness of the reinforcing layer was set as shown in the following Tables 2 and 3.

[Example 5]

A tire was obtained in the same manner as in the example 1 except that the thickness TA and the hardness of the reinforcing layer were set as shown in the following Table 2.

[Examples 7, 8, 10, 11 and 12]

A tire was obtained in the same manner as in the example 1 except that the ratio (HU/H0 X 100) was set as shown in the following Tables 2 and 3.

[Examples 2, 16 and 17]

A tire was obtained in the same manner as in the example 1 except that the ratio (HB/H0 X 100) and the ratio (HL/H0 X 100) were set as shown in the following Tables 2, 3 and 4.

[Examples 9, 18, 19, 20 and 21]

A tire was obtained in the same manner as in the example 1 except that the ratio (HU/H0 X 100), the ratio (HC/H0 X 100), the ratio (HB/H0 X 100) and the ratio (HL/H0 X 100) were set as shown in the following Tables 2, 3 and 4.

[Comparative Example 3]

A tire was obtained in the same manner as in the example 1 except that the ratio (HC/H0 X 100) and the ratio (HB/H0 X 100) were set as shown in the following Table 2, and the reinforcing layer was not provided.

[Examples 22, 23, 24 and 25]

A tire was obtained in the same manner as in the example 1 except that a cord C having a specification shown in the following Table 1 was used for a carcass cord, and the hardness of the reinforcing layer, and the ratio (HU/H0 X 100) , the ratio (HC/H0 X 100), the ratio (HB/H0 X 100) and the ratio (HL/H0 X 100) were set as shown in the following Table 4.

[Comparative Examples 1 and 2]

A tire was obtained in the same manner as in the example 1 except that a cord A having a specification shown in the following Table 1 was used for a carcass cord, the ratio (HC/H0 X 100) and the ratio (HB/H0 X 100) were set as shown in the following Table 2, and the reinforcing layer was not provided. The comparative examples 1 and 2 refer to a conventional tire.

[Actual Vehicle Evaluation]

A tire was attached to a front-engine and rear-wheel-drive car having a displacement of 3000 cm$^3$. An internal pressure of the tire was set to be 230 kPa. For the car, a running test was carried out over an asphalted road. Referring to a handling stability and a ride comfort, a functional evaluation having a full point set to be 10 was performed by a driver. A result is shown in the following Tables 2, 3 and 4. It is indicated that the function is more excellent if the numeric value is greater.

Table 1 Specification of carcass cord

| | Cord A | Cord B | Cord C |
|---|---|---|---|
| Material | PET [2] | PEN [3] | PEN [3] |
| Specific gravity | 1.38 | 1.36 | 1.36 |
| Structure (d = denier) | 1500d/2 | 1500d/2 | 1000d/3 |
| Total denier number | 3000 | 3000 | 3000 |
| Number of first twist (the number of time / 10 cm) | 40 | 40 | 40 |
| Number of final twist (the number of time / 10 cm) | 40 | 40 | 40 |
| Twist coefficient | 1865 | 1879 | 1879 |
| Elongation(%) [1] | 4.3 | 2.5 | 2.5 |
| 1) This is an elongation with a tension load set to be 2.2 g/d.<br>2) PET represents polyethylene terephthalate.<br>3) PEN represents polyethylene-2, 6-naphthalate. | | | |

Table 2 Specification of tire and result of evaluation

| | | Comp. example 1 | Comp. example 2 | Comp. example 3 | Example 2 | Example 3 | Example 4 | Example 5 | Example 6 | Example 7 | Example 8 |
|---|---|---|---|---|---|---|---|---|---|---|---|
| Carcass cord | | Cord A | Cord A | Cord B | Cord B | Cord B | Cord B | Cord B | Cord B | Cord B | Cord B |
| Reinforcing layer | Thickness TA (mm) | - | - | - | 1. 0 | 1. 0 | 0.3 | 0.4 | 1. 0 | 1. 0 | 1. 0 |
| | Hardness | - | - | - | 90 | 70 | 90 | 75 | 80 | 90 | 90 |
| HU/H0 $\times$ 100 (%) | | - | - | - | 75 | 75 | 75 | 75 | 75 | 45 | 50 |
| HC/H0 $\times$ 100 (%) | | 60 | 60 | 60 | 60 | 60 | 60 | 60 | 60 | 60 | 60 |
| HD/H0 $\times$ 100[1] (%) | | - | - | - | 15 | 15 | 15 | 15 | 15 | -15 | -10 |
| HB/H0 $\times$ 100 (%) | | 40 | 50 | 50 | 15 | 30 | 30 | 30 | 30 | 30 | 30 |
| HL/H0 $\times$ 100 (%) | | - | - | - | 10 | 25 | 25 | 25 | 25 | 25 | 25 |
| HS/H0 $\times$ 100[2] (%) | | - | - | - | 5 | 5 | 5 | 5 | 5 | 5 | 5 |
| Handling stability | | 6 | 6.5 | 7 | 6.5 | 6.5 | 6.5 | 6.5 | 7.0 | 6.5 | 6.8 |
| Ride comfort | | 6 | 5 | 4 | 7.5 | 7.5 | 6.5 | 7.0 | 7.5 | 7.5 | 7.3 |
| 1) HD/H0$\times$100=(HU-HC)/H0$\times$100 <br> 2) HS/H0$\times$100=(HB-HL)/H0$\times$100 | | | | | | | | | | | |

EP 1 844 956 A2

Table 3 Specification of tire and result of evaluation

| | | Example 9 | Example 10 | Example 1 | Example 11 | Example 12 | Example 13 | Example 14 | Example 15 | Example 16 |
|---|---|---|---|---|---|---|---|---|---|---|
| Carcass cord | | Cord B | Cord B | Cord B | Cord B | Cord B | Cord B | Cord B | Cord B | Cord B |
| Reinforcing layer | Thickness TA (mm) | 1.0 | 1.0 | 1.0 | 1.0 | 1.0 | 2.0 | 2.5 | 1.0 | 1.0 |
| | Hardness | 90 | 90 | 90 | 90 | 90 | 90 | 90 | 95 | 90 |
| HU/H0×100 (%) | | 55 | 65 | 75 | 80 | 90 | 75 | 75 | 75 | 75 |
| HC/H0×100 (%) | | 60 | 60 | 60 | 60 | 60 | 60 | 60 | 60 | 60 |
| HD/H0×100[1] (%) | | -5 | 5 | 15 | 20 | 30 | 15 | 15 | 15 | 15 |
| HB/H0×100 (%) | | 40 | 30 | 30 | 30 | 30 | 30 | 30 | 30 | 30 |
| HL/H0×100 (%) | | 30 | 25 | 25 | 25 | 25 | 25 | 25 | 25 | 40 |
| HS/H0×100[2] (%) | | 10 | 5 | 5 | 5 | 5 | 5 | 5 | 5 | -10 |
| Handling stability | | 7.0 | 7.0 | 7.5 | 8.0 | 8.5 | 8.0 | 8.3 | 8.0 | 6.5 |
| Ride comfort | | 6.5 | 7.3 | 7 | 6.5 | 6 | 6.0 | 5.5 | 6.5 | 7 |

1) HD/H0×100=(HU-HC)/H0×100
2) HS/H0×100=(HB-HL)/H0×100

Table 4 Specification of tire and result of evaluation

| | | Example 17 | Example 18 | Example 19 | Example 20 | Example 21 | Example 22 | Example 23 | Example 24 | Example 25 |
|---|---|---|---|---|---|---|---|---|---|---|
| Carcass cord | | Cord B | Cord B | Cord B | Cord B | Cord B | Cord C | Cord C | Cord C | Cord C |
| Reinforcing layer | Thickness TA (mm) | 1.0 | 1.0 | 1.0 | 1.0 | 1.0 | 1.0 | 1.0 | 1.0 | 1.0 |
| | Hardness | 90 | 90 | 90 | 90 | 90 | 80 | 90 | 90 | 80 |
| HU/H0 $\times$ 100 (%) | | 75 | 60 | 75 | 80 | 70 | 75 | 55 | 75 | 75 |
| HC/H0 $\times$ 100 (%) | | 60 | 60 | 70 | 70 | 50 | 60 | 60 | 60 | 60 |
| HD/H0 $\times$ 100[1] (%) | | 15 | 0 | 5 | 10 | 0 | 15 | -5 | 15 | 15 |
| HB/H0 $\times$ 100 (%) | | 45 | 25 | 25 | 25 | 25 | 30 | 40 | 30 | 40 |
| HL/H0 $\times$ 100 (%) | | 40 | 25 | 25 | 25 | 25 | 25 | 30 | 25 | 25 |
| HS/H0 $\times$ 100[2] (%) | | 5 | 0 | 0 | 0 | 0 | 5 | 10 | 5 | 15 |
| Handling stability | | 7.5 | 7 | 7.5 | 7.5 | 7 | 7.5 | 7.5 | 8 | 8 |
| Ride comfort | | 6.0 | 6.5 | 7 | 7 | 6.5 | 8 | 6.5 | 7.5 | 7.5 |
| 1) HD/H0$\times$100=(HU-HC)/HO$\times$100<br>2) HS/H0$\times$100=(HB-HL)/H0$\times$100 | | | | | | | | | | |

As shown in the Tables 2, 3 and 4, the tire according to each of the examples is excellent in the handling stability and the ride comfort. From the result of the evaluation, the advantages of the present invention are apparent.

The above description is only illustrative and various changes can be made without departing from the scope of the present invention.

**Claims**

1.  A pneumatic tire comprising a pair of beads including a core and an apex, a carcass laid over the beads on both sides, and a reinforcing layer,
    wherein the carcass includes a carcass ply having a carcass cord constituted by a polyethylene naphthalate fiber,
    the carcass ply is turned up around the core from an inside toward an outside in an axial direction,
    the carcass ply is constituted by a body extended from an equator plane toward the bead, and a turned-up portion extended outward in a radial direction,
    the reinforcing layer is interposed between the body and the turned-up portion,
    a ratio of a height in the radial direction from a bead base line to an upper end of the reinforcing layer to a tire sectional height is equal to or higher than 45%,
    a thickness of the reinforcing layer is equal to or greater than 0.3 mm and is equal to or smaller than 2.5 mm, and
    a hardness of the reinforcing layer is equal to or greater than 70 and is equal to or smaller than 95.

2.  The tire according to claim 1, wherein a ratio of a height in the radial direction from the bead base line to a turned-up end of the turned-up portion to the tire sectional height is equal to or higher than 40%.

3.  The tire according to claim 1, wherein a lower end of the reinforcing layer is positioned on an inside in the radial direction from an upper end of the apex,
    an upper end of the reinforcing layer is positioned on an outside in the radial direction from a turned-up end of the turned-up portion,
    a ratio of a height in the radial direction from the bead base line to the upper end of the apex to the tire sectional height is equal to or higher than 15% and is equal to or lower than 45%, and
    a ratio of a distance in the radial direction from the turned-up end to the upper end of the reinforcing layer to the tire sectional height is equal to or higher than 5% and is equal to or lower than 20%.

4.  The tire according to claim 1, wherein an elongation of the carcass cord with a tension load set to be 2.2 g/d is equal to or higher than 2.0% and is lower than 3.0%, and
    a twist coefficient of the carcass cord is equal to or higher than 1400 and is equal to or lower than 2000.

Fig. 1

EP 1 844 956 A2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005178520 A